# EUROPEAN PATENT APPLICATION

(11) **EP 1 420 334 A2**
(43) Date of publication of application: **19.05.2004**
(21) Application number: 03026125.9
(22) Date of filing: 13.11.2003
(51) Int. Cl.: G06F 3/033

(54) **Image forming apparatus**

(30) Priority: 15.11.2002 JP 2002331872
(71) Applicant: KONICA MINOLTA HOLDINGS, INC., Tokyo 100-0005 (JP)
(72) Inventor: Konuma, Shigeo, Hachioji-shi Tokyo (JP); Kasahara, Seitaro, Hachioji-shi Tokyo (JP)
(74) Representative: Henkel, Feiler & Hänzel

(57) **Abstract**

This invention relates to an image forming apparatus that has a high degree of flexibility in the display form of the operation panel. An image forming apparatus of this invention includes an operation display section which has a transparent touch panel superposed on the display screen of a display section, can input an operation instruction by pressing a transparent touch panel portion corresponding to an operation instruction item character group displayed on the display screen, and is associated with the main body of the image forming apparatus. The apparatus further includes an operation display control section which controls the operation display section to display, on the display screen, selection items to decide the display size of the operation instruction item character group or each operation button on the display screen and display the operation instruction item character group or each operation button in the display size decided by selecting a selection item.

## Description

### BACKGROUND OF THE INVENTION

### FIELD OF THE INVENTION:

The present invention relates to an image forming apparatus which has a transparent touch panel superposed on the display screen of a display section and an operation display section capable of inputting an operation instruction by pressing the transparent touch panel.

### DESCRIPTION OF THE PRIOR ART:

Various techniques have conventionally been invented and disclosed to solve difficulties in viewing a display device serving as a user interface. For example, a technique for the display device of a credit transaction apparatus is disclosed (e.g., Japanese Unexamined Patent Application No. 6-27931). In this technique, the number of characters input from the keyboard is counted. If it is determined that the count value exceeds the number of characters that can be displayed in a normal character size, the number of characters to be displayed in a smaller character size is decided. Characters in the decided number are displayed in a character size smaller than the normal size. Additionally, a technique for an information processing apparatus capable of receiving and displaying a character string is disclosed (e.g., Japanese Patent No. 2971009). In this technique, even when the maximum number of displayable characters is smaller than the number of characters per line that is set as a format, a received character string is sequentially displayed in the following lines of the window for every maximum number of characters displayable' in the horizontal direction of the window of the display device. With this processing, the user can read the character string at a glance.

An image forming apparatus comprises, as a user interface, an operation panel which has a transparent touch panel superposed on the display screen of a display section. Various operation buttons, an image state, and the operation situations of functions are displayed on the window of the operation panel. A user inputs an operation instruction to the image forming apparatus by touching various operation buttons displayed on the window of the operation panel. The user can also recognize the state of the image forming apparatus on the basis of the display of the image state and the operation situations of the functions. The sizes of characters and operation buttons displayed on the window of the operation panel are conventionally fixed to standard sizes.

However, the impression of the character or button size changes depending on the user. The today's fixed character or button size is not always optimum and convenient for each user. In an extreme case, a user with weak eyes cannot recognize characters.

### SUMMARY OF THE INVENTION

The present invention has been made in consideration of the above situation in the prior art, and has as its object to provide an image forming apparatus that has a high degree of flexibility in the display form of the operation panel.

In order to achieve the above object, according to the first aspect of the present invention, there is provided an image forming apparatus comprising an operation display section which has a transparent touch panel superposed on a display screen of a display section, can input an operation instruction by pressing a 'transparent touch panel portion corresponding to an operation instruction item character group displayed on the display screen, and is associated with a main body of the image forming apparatus, comprising an operation display control section which controls the operation display section to display, on the display screen, selection items to decide a display size of the operation instruction item character group on the display screen and display the operation instruction item character group in the display size decided by selecting a selection item.

According to the second aspect of the present invention, there is provided an image forming apparatus in which the operation display control section of the image forming apparatus according to the first aspect comprises determination means for determining whether the operation instruction item character group having the decided display size can be displayed in one display window layout, and layout setting means for setting a display window layout of the operation instruction item character group on the display screen on the basis of a determination result of the determination means.

According to the third aspect of the present invention, there is provided an image forming apparatus in which the display window layout according to the second aspect includes a standard display window layout and a change display window layout.

According to the fourth aspect of the present invention, there is provided an image forming apparatus in which the standard display window layout according to the third aspect is set by the layout setting means when the determination means determines that the display size of the operation instruction item character group is less than a predetermined display size.

According to the fifth aspect of the present invention, there is provided an image forming apparatus in which the change display window layout according to the third aspect is set by the layout setting means when the determination means determines that the display size of the operation instruction item character group is not less than a predetermined display size.

According to the sixth aspect of the present invention, there is provided an image forming apparatus comprising an operation display section which has a transparent touch panel superposed on a display screen of a display section, can input an operation instruction by pressing a transparent touch panel portion corresponding to each operation button displayed on the display screen, and is associated with a main body of the image forming apparatus, comprising an operation display control section which controls the operation display section to display, on the display screen, selection items to decide a display size of each operation button on the display screen and display each operation button in the display size decided by selecting a selection item.

According to the seventh aspect of the present invention, there is provided an image forming apparatus in which the operation display control section of the image forming apparatus according to the sixth aspect comprises determination means for determining whether each operation button having the decided display size can be displayed in one display window layout, and layout setting means for setting a display window layout of each operation button on the display screen on the basis of a determination result of the determination means.

According to the eighth aspect of the present invention, there is provided an image forming apparatus in which the display window layout according to the seventh aspect includes a standard display window layout and a change display window layout.

According to the ninth aspect of the present invention, there is provided an image forming apparatus in which the standard display window layout according to the eighth aspect is set by the layout setting means when the determination means determines that the display size of each operation button is less than a predetermined display size.

According to the 10th aspect of the present invention, there is provided an image forming apparatus in which the change display window layout according to the eighth aspect is set by the layout setting means when the determination means determines that the display size of each operation button is not less than a predetermined display size.

As is apparent from the above aspects, according to the present invention, the following functions and effects can be obtained for each aspect.

According to the first aspect, the operation display section is controlled such that the selection items to decide the display size of the operation instruction item character group on the display screen of the image forming apparatus are displayed on the display screen, and the operation instruction item character group is displayed in the display size decided by selecting a selection item. Since the display size of the operation instruction item character group can be changed, the display can be changed to the one that is optimum and convenient for each user.

According to the second aspect, it is determined whether the operation instruction item character group having the decided display size can be displayed in one display window layout in accordance with the standard display window layout. The display window layout of the operation instruction item character group on the display screen is decided on the basis of the determination result. Hence, the display window layout can automatically be changed to the one corresponding to the display size of the operation instruction item character group.

According to the sixth aspect, the operation display section is controlled such that the selection items to decide the display size of each operation button on the display screen of the image forming apparatus are displayed on the display screen, and each operation button is displayed in the display size decided by selecting a selection item. Since the display size of each operation button can be changed, the display can be changed to the one that is optimum and convenient for each user.

According to the seventh aspect, it is determined whether each operation button having the decided display size can be displayed in one display window layout in accordance with the standard display window layout. The display window layout of each operation button on the display screen is decided on the basis of the determination result. Hence, the display window layout can automatically be changed to the one corresponding to the display size of each operation button.

The above and many other objects, features and advantages of the present invention will become manifest to those skilled in the art upon making reference to the following detailed description and accompanying drawings in which preferred embodiments incorporating the principle of the present invention are shown by way of illustrative examples.

### BRIEF DESCRIPTION OF THE DRAWINGS

Fig. 1 is a block diagram showing the functional arrangement of an image forming apparatus according to the present invention;
Fig. 2 is a flow chart showing character size change setting processing executed by the operation display control section shown in Fig. 1;
Fig. 3 is a view showing an example of a character size selection window displayed on the LCD shown in Fig. 1;
Figs. 4A and 4B are views showing two examples of an application function window displayed on the LCD shown in Fig. 1 when a character size is selected on the character size selection window shown in Fig. 2;
Figs. 5A and 5B are views showing two additional examples of the application function window displayed on the LCD shown in Fig. 1 when a character size is selected on the character size selection window shown in Fig. 2;
Fig. 6 is a flow chart showing button size change setting processing executed by the operation display control section shown in Fig. 1;
Fig. 7 is a view showing an example of a button size selection window displayed on the LCD shown in Fig. 1;
Figs. 8A and 8B are views showing an example of the application function window displayed on the LCD shown in Fig. 1 when a button size is selected on the button size selection window shown in Fig. 5; and
Figs. 9A and 9B are views showing two additional examples of the application function window displayed on the LCD shown in Fig. 1 when a button size is selected on the button size selection window shown in Fig. 5.

### DETAILED DESCRIPTION OF THE PREFERRED EMBODIMENT

A preferred embodiment of the present invention will be described below with reference to the accompanying drawings.

The arrangement of an embodiment of the present invention will be described first. An "operation instruction item character group" described in the claims of the present invention indicates characters, symbols, and signs that represent a plurality of operation instruction items. The operation instruction item character group may include abstract graphic patterns. A description will be made below by using characters as an example of the operation instruction item character group.

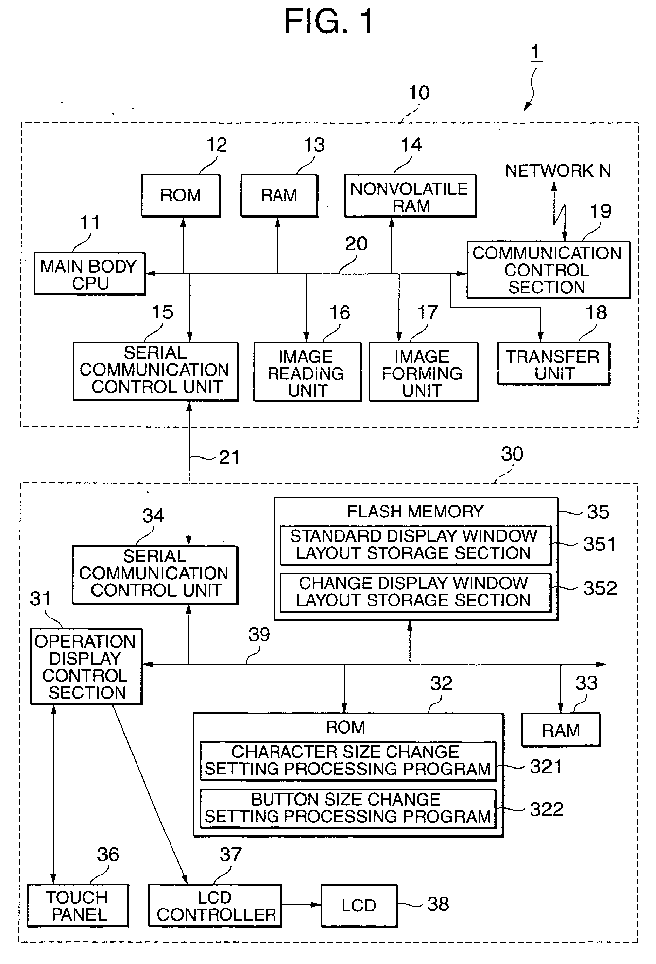

Fig. 1 is a block diagram showing the arrangement of a main body 10 and operation display section 30 of an image forming apparatus 1. As shown in Fig. 1, the operation display section 30 is connected to the main body 10 of the image forming apparatus 1 through a signal line 21. Display control signals and operation signals are transmitted/received between the main body 10 and the operation display section 30 through the signal line 21.

As shown in Fig. 1, the main body 10 of the image forming apparatus 1 is constituted by a main body CPU (Central Processing Unit) 11, ROM (Read Only Memory) 12, RAM (Random Access Memory) 13, nonvolatile RAM 14, serial communication control unit 15, image reading unit 16, image forming unit 17, transfer unit 18, and communication control section 19. These sections are connected through a bus 20.

The main body CPU 11 reads out, to the RAM 13, a system program that is stored in the ROM 12 and controls the image forming apparatus 1. By cooperation with the readout program, the main body CPU 11 controls the entire image forming apparatus 1. The main body CPU 11 also bitmaps, on the RAM 13, various processing programs stored in the ROM 12. By cooperation with the various processing programs, the main body CPU 11 executes various processing operations in accordance with an operation signal input from the operation display section 30 or data input through the communication control section 19.

In accordance with the various processing programs stored in the ROM 12, the main body CPU 11 executes, e.g., copy processing, print processing, and scanner processing. In copy processing, an original placed on the contact glass of the image reading unit 16 is copied in accordance with user's press operation on a touch panel 36 of the operation display section 30. In print processing, data transmitted from an external device is received through a network N, and print output is executed on the basis of the data. In scanner processing, an original placed on the contact glass of the image reading unit 16 is read, and the read image data is output to an external device through the network N.

The ROM 12 is formed from a nonvolatile semiconductor memory. The ROM 12 stores the system program corresponding to the image forming apparatus 1 and various processing programs that can be executed on the system,program. The programs are stored in the form of computer-readable program codes. The main body CPU 11 sequentially executes operations corresponding to the program codes.

In various processing operations executed and controlled by the main body CPU 11, the RAM 13 serves as a temporary storage area for the programs read out from the ROM 12, input/output data, and parameters.

The nonvolatile RAM 14 stores various kinds of setting information of the image forming apparatus 1, which are input from the operation display section 30, under the control of the main body CPU 11.

The serial communication control unit 15 controls input/output of control signals and operation signals by serial communication between the main body 10 and the operation display section 30.

The image reading unit 16 has a scanner on the lower side of the contact glass on which an original is placed. The image reading unit 16 reads the image of the original. The scanner is constituted by a light source, a CCD (Charge Coupled Device), and the like. The original is illuminated and scanned with light from the light source. The scanner reads the original image by forming an image of reflected light and photoelectrically converting the image data. The read image is output to the image forming unit 17. The image includes not only image data such as graphic patterns and photos but also text data such as characters and symbols.

The image forming unit 17 executes image processing such as enlargement/reduction, rotation, and position change for an image input from the image reading unit 16 or an image received by the communication control section 19 in accordance with an input instruction from the operation display section 30 or instruction data contained in the data received from the communication control section 19. The processed image is output to the transfer unit 18.

The transfer unit 18 comprises a photosensitive drum, toner, discharge section, and paper feed section. In the transfer unit 18, a printing paper sheet with a size and direction which are instructed from the operation display section 30 or instructed by the instruction data contained in the data received from the communication control section 19 is conveyed from the paper feed section, and the electrostatic latent image of the image input from the image forming unit 17 is formed on the photosensitive drum surface in accordance with a print instruction from the main body CPU 11. The transfer unit 18 also adheres the toner to the photosensitive drum surface in a region including the electrostatic latent image. The toner is transferred to and fixed on the printing paper sheet conveyed from the paper feed section. Then, the paper sheet is discharged from the discharge section.

The communication control section 19 is constituted by a modem, TA, and router, and controls communication with an external device connected to the network N.

As shown in Fig. 1, the operation display section 30 is formed by integrating an operation section and a display section. The operation display section 30 comprises an operation display control section 31, ROM 32, RAM 33, serial communication control unit 34, flash memory 35, touch panel 36, LCD controller 37, and LCD 38. The internal units are connected through a bus 39.

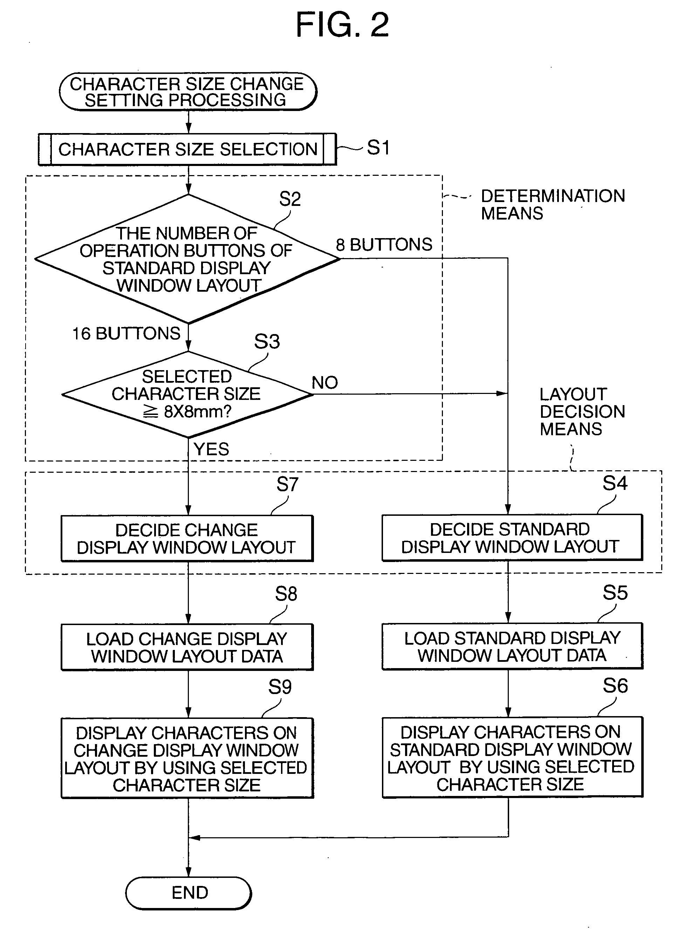

In accordance with a control signal from the main body CPU 11, the operation display control section 31 reads out, to the RAM 33, a control program and various processing programs which are stored in the ROM 32. The operation display control section 31 executes operation control and display control in the operation display section 30 in accordance with the readout programs. More specifically, the operation display control section 31 executes character size change setting processing (Fig. 2) in accordance with a character size change setting processing program 321 stored in the ROM 32. This processing will be briefly described below. When a character size is selected through the touch panel 36, the selected character size is set as a display character size, and a display window is displayed on the LCD 38. At this time, a determination means (Fig. 2) determines by referring to a standard display window layout storage section 351 in the flash memory 35 whether characters with the selected display size can be displayed in one display window by using the standard display window layout. If the characters can be displayed, a layout decision means (Fig. 2) decides the standard display window layout. If the characters cannot be displayed, the layout decision means decides a change display window layout. The characters having the set character size are displayed in accordance with the decided display window layout.

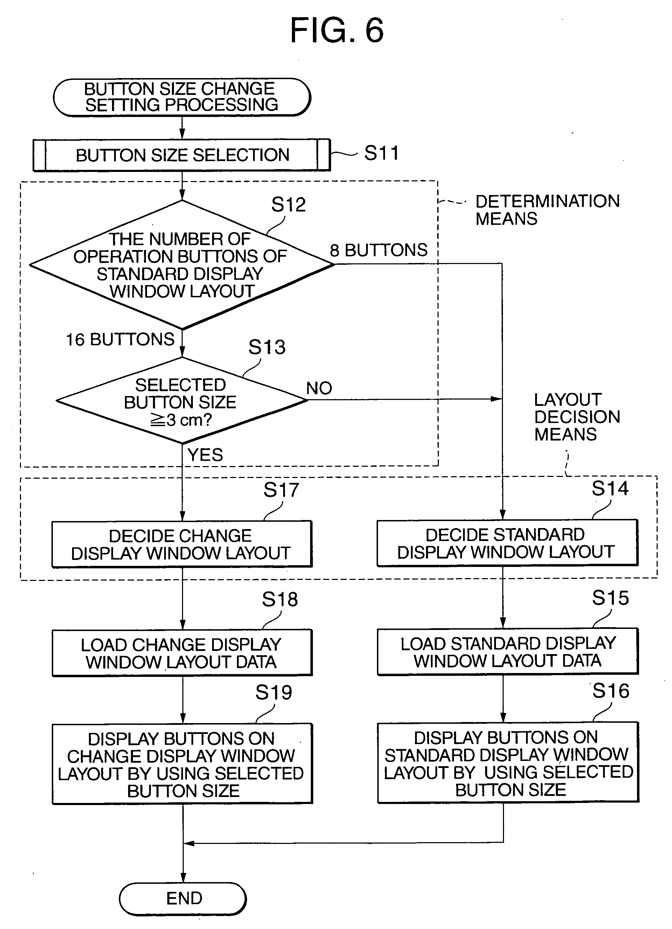

The operation display control section 31 also executes button size change setting processing (Fig. 6) in accordance with a button size change setting processing program 322 stored in the ROM 32. More specifically, when a button size is selected from the touch panel 36, the selected button size is set as a display button size, and a display window is displayed on the LCD 38. At this time, a determination means (Fig. 6) determines by referring to the standard display window layout storage section 351 in the flash memory 35 whether operation buttons with the selected display size can be displayed in one display window by using the standard display window layout. If the operation buttons can be displayed, a layout decision means (Fig. 6) decides the standard display window layout. If the operation buttons cannot be displayed, the layout decision means decides a change display window layout. The operation buttons having the set button size are displayed in accordance with the decided display window layout.

In addition, the operation display control section 31 outputs an operation signal input from the touch panel 36 to the main body 10 through the serial' communication control unit 34.

The ROM 32 is formed from a nonvolatile semiconductor memory. The ROM 32 stores various control programs and processing programs corresponding to the operation display section 30. The ROM 32 stores, e.g., the character size change setting processing program 321 and button size change setting processing program 322.

In various processing operations executed and controlled by the operation display control section 31, the RAM 33 serves as a temporary storage area for the programs read out from the ROM 32, input/output data, and parameters.

The serial communication control unit 34 controls input/output of control signals and operation signals by serial communication between the main body 10 and the operation display section 30.

The flash memory 35 stores various kinds of setting information about the operation display section 30, including display character size setting and display button size setting input from the touch panel 36, in accordance with a control signal from the operation display control section 31. The flash memory 35 also incorporates the standard display window layout storage section 351 which stores the data of the standard display window layout for each display window and a change display window layout storage section 352 which stores the data of the change display window layout for each display window, as shown in Fig. 11.

In this embodiment, the number of operation buttons of the standard display window layout stored in the standard display window layout storage section 351 is 8 or 16. In the standard display window layout with 8 operation buttons, characters or buttons can be displayed in any character or button size settable in the image forming apparatus 1. In the standard display window layout with 16 operation buttons, characters with a size smaller than 8 X 8 mm or buttons with a size smaller than 3 cm can be displayed in one display window.

The touch panel 36 is a pressure-sensitive (resistive film pressure scheme) touch panel formed by arranging transparent electrodes in a grid on the display screen of the LCD 38. The X- and Y-coordinates of a power point pressed by a finger or touch pen are detected as voltage values. The detected position signal is output to the operation display control section 31 as an operation signal. The touch panel 36 need not always be a pressure-sensitive touch panel. An electrostatic or optical touch panel may be used.

The LCD controller 37 drives and controls the LCD 38 in accordance with the instruction of a display signal input from the operation display control section 31 to cause the LCD 38 to display various operation windows on its display screen.

The LCD 38 serving as a display section is driven and controlled by the LCD controller 37 to display various operation buttons, an image state, and the operation situations of the functions.

The operation of the image forming apparatus according to the present invention will be described next.

Fig. 2 shows the operation flow of character size change setting processing executed by the operation display control section 31. The character size change setting processing will be described below with reference to Fig. 2.

In the character size change setting processing, when a character size change instruction is input from the touch panel 36, character size selection processing is executed (step S1). In the character size selection processing, a character size selection window is displayed on the LCD 38 through the LCD controller 37. When a character size is selected and input, the selected character size is set as a display character size.

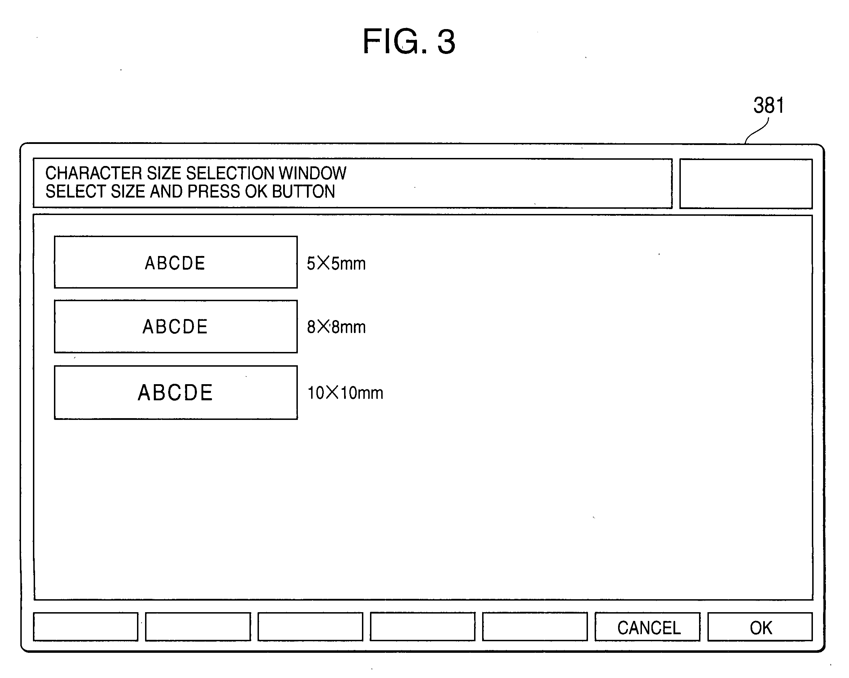

Fig. 3 shows an example of a character size selection window 381. As shown in Fig. 3, an operation instruction "select size and press OK button" is displayed at the upper portion of the character size selection window 381. Icons with actual character sizes are displayed at the center of the window in correspondence with display (5 × 5 mm, 8 × 8 mm, and 10 × 10 mm) representing the character sizes. When an icon for a character size desired by the user is selected and pressed, and the OK button is also pressed, the press signal is input from the touch panel 36. The selected character size is set at the display character size.

The display character size is set in step S1 in Fig. 2. Then, in step S2 as a determination means, the number of operation buttons of the standard display window layout in the display window is determined in consideration of the selected character size and by referring to the standard display window layout storage section 351. If the number of operation buttons of the standard display window layout is determined as 8 (8 buttons in step S2), the standard display window layout is decided as the display window layout in step S4 as a layout decision means. Standard display window layout data is loaded from the standard display window layout storage section 351 (step S5). A display window in which characters having the set character size are displayed is displayed on the LCD 38 in accordance with the standard display window layout (step' S6). The standard display window layout of the image forming apparatus 1 has "8" or "16" operation buttons. In the standard display window layout with "8" operation buttons, characters that should be displayed in one display window can be displayed in any character size settable in the image forming apparatus 1.

If the number of operation buttons of the standard display window layout is determined as 16 (16 buttons in step S2), it is determined in step S3 as another determination means whether the character size selected and set in step S1 is a predetermined size, e.g., 8 × 8 mm or more. If it is determined that the selected and set character size is not 8 × 8 mm or more (NO in step S3), the standard display window layout is decided as the display window layout in step S4 as a layout decision means. Standard display window layout data is loaded from the standard display window layout storage section 351 (step S5). Characters having the set character size are displayed on the LCD 38 in accordance with the standard display window layout (step S6).

On the other hand, if the selected and set character size is 8 × 8 mm or more (YES in step S3), a change display window layout is decided as the display window layout in step S7 as a layout decision means. Change display window layout data is loaded from the change display window layout storage section 352 (step S8). A display window in which characters having the set character size are displayed is displayed on the LCD 38 in accordance with the change display window layout (step S9).

In switching to another display window, the operation display control section 31 executes processing from step S2. A display window is displayed, in which characters having a character size set by a display window layout corresponding to the number of operation buttons and selected character size in the standard display window layout of another display window are displayed.

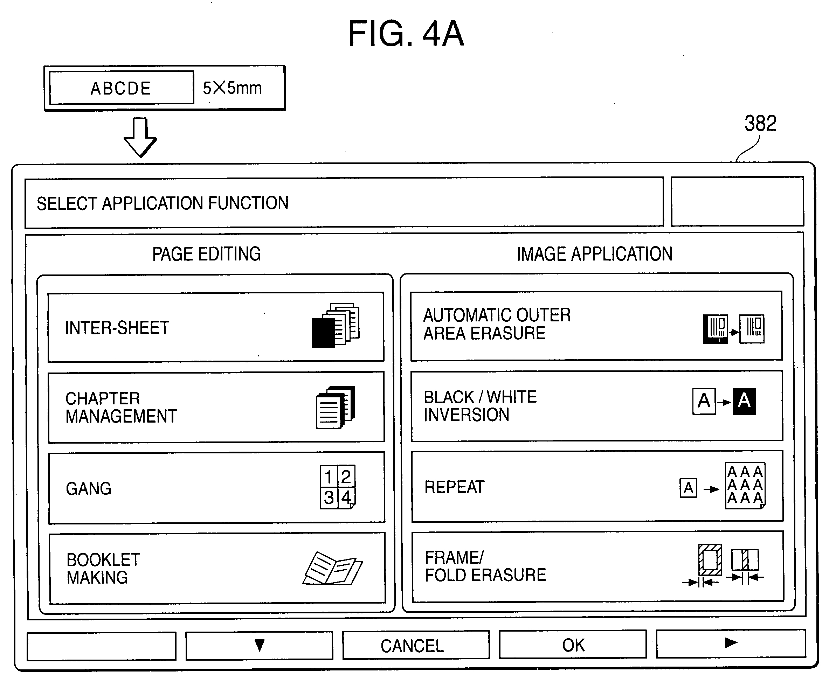

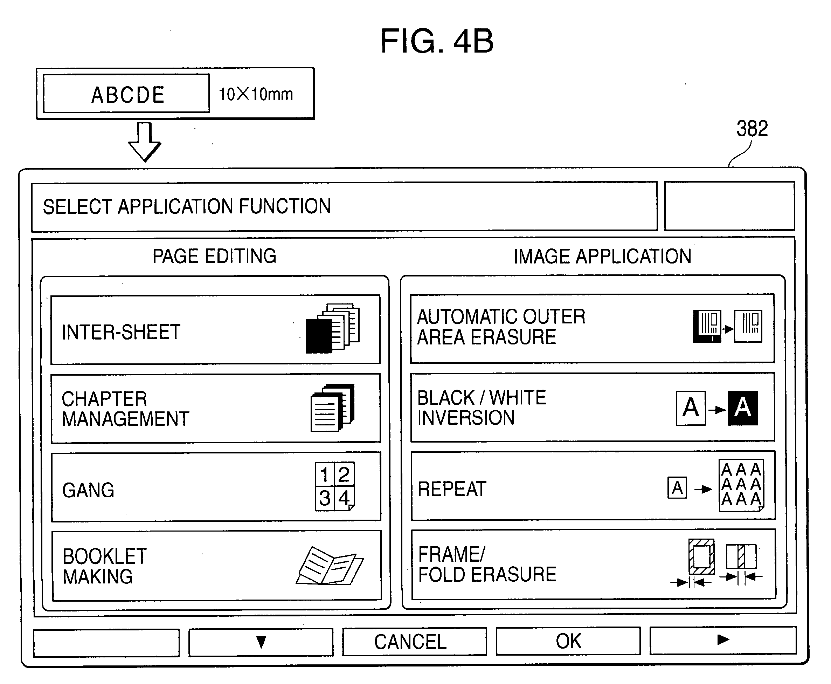

Fig. 4A shows an example of a window displayed when character size 5 × 5 mm is selected on the character size selection window 381. In this window, an application function window 382 corresponding to the standard display window layout with 8 operation buttons is displayed in accordance with setting of character size 5 × 5 mm. Fig. 4B shows the application function window 382 displayed when character size 10 × 10 mm is selected.

As shown in Figs. 4A and 4B, even when the character size is changed to the selected character size, all characters that should be displayed in one display window can be displayed by using the standard display window layout. For this reason, the display window layout is not changed. On the application function window 382, the display window layout is not changed even when the character size is changed. However, the easiness in seeing and impression greatly change depending on the character size. Hence, the user can set a window with a desired character size on a familiar display window layout.

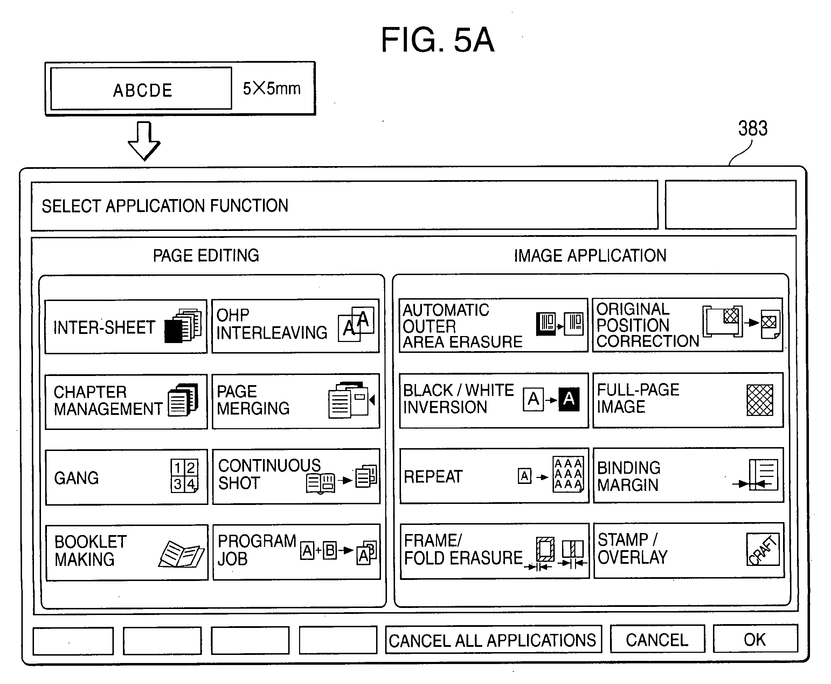

Fig. 5A shows another example of the window displayed when character size 5 × 5 mm is selected on the character size selection window 381. In this window, an application function window 383 corresponding to the standard display window layout with 16 operation buttons is displayed in accordance with setting of character size 5 × 5 mm. As shown in Fig. 5A, when the character size is 5 × 5 mm, the window can be displayed in the standard display window layout. Hence, the application function window 383 is displayed in the standard display window layout.

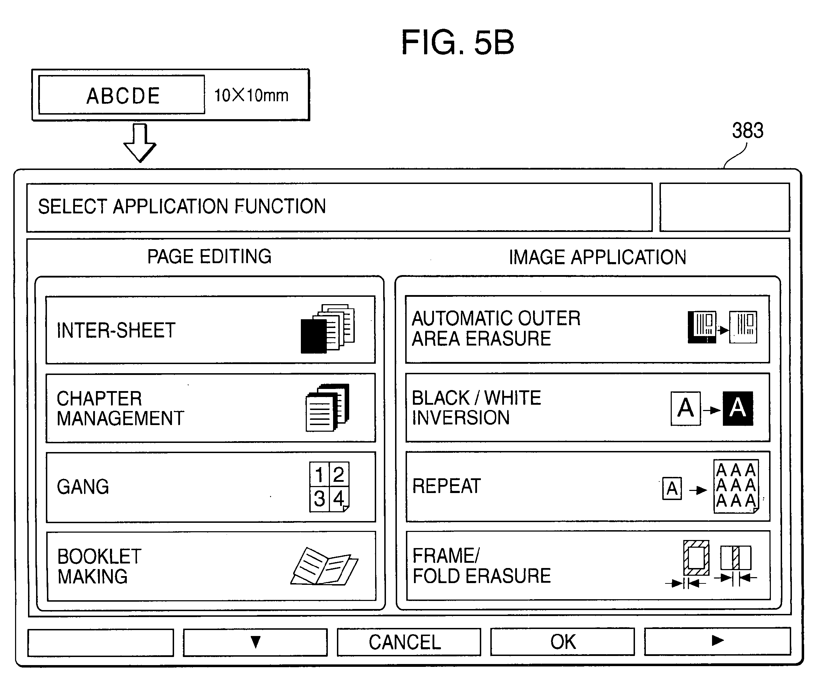

Fig. 5B shows an example of the window 383 displayed when character size 10 × 10 mm is selected. As shown in Fig. 5B, when the character size is changed to 10 × 10 mm, all characters that should be displayed in one display window cannot be displayed by using the standard display window layout. Hence, the display window layout is changed to a change display window layout.

As described above, the application function window 383 cannot be displayed in the standard display window layout for a certain character size. However, the display window layout can be changed in accordance with the character size. When a small character size is selected, many operation buttons and information can be displayed in one display window. For this reason, the necessity for scrolling the window decreases, and the operability increases. When a large character size is selected, a display window that is easy to see can be provided.

The standard display window layout of each application function window is set for each image forming apparatus 1 in advance. However, the user may be allowed to set the standard display window layout of each display window.

Button size change setting processing will be described next with reference to Fig. 6.

Fig. 6 shows the operation flow of the button size change setting processing executed by the operation display control section 31.

In the button size change setting processing, when a button size change instruction is input from the touch panel 36, button size selection processing is executed (step S11). In the button size selection processing, a button size selection window is displayed on the LCD 38 through the LCD controller 37. When a button size is selected and input, the selected button size is set as a display button size.

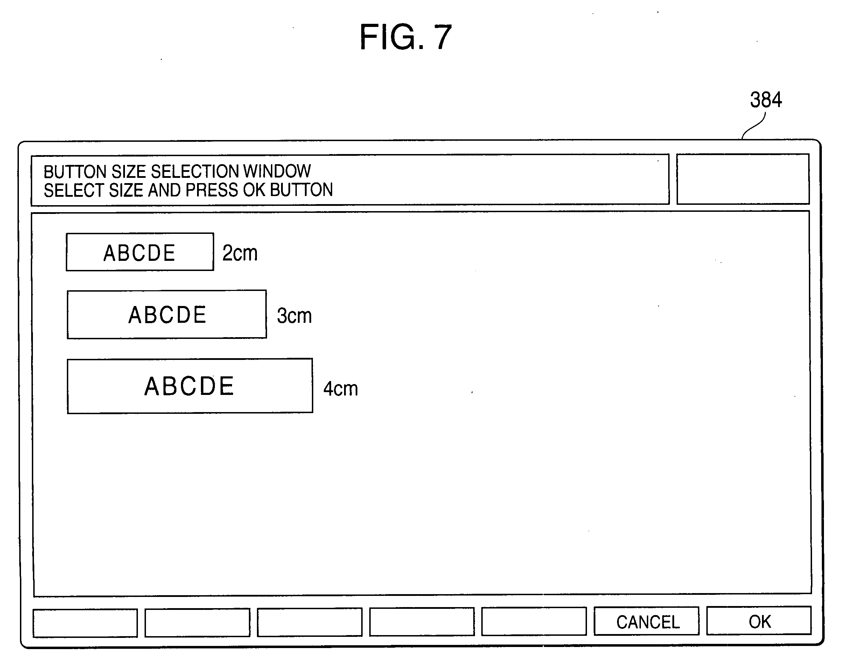

Fig. 7 shows an example of a button size selection window 384. As shown in Fig. 7, an operation instruction "select size and press OK button" is displayed at the upper portion of the button size selection window 384. Icons with actual button sizes are displayed at the center of the window in correspondence with.display (2 cm, 3 cm, and 4 cm) representing the button sizes. When an icon for a button size desired by the user is selected and pressed, and the OK button is also pressed, the press signal is input from the touch panel 36. The selected button size is set at the display button size.

The display button size is set in step S11 in Fig. 6. Then, in step S12 as a determination means, the number of operation buttons of the standard display window layout in the display window is determined in consideration of the selected button size and by referring to the standard display window layout storage section 351. If the number of operation buttons of the standard display window layout is determined as 8 (8 buttons in step S12), the standard display window layout is decided as the display window layout in step S14 as a layout decision means. Standard display window layout data is loaded from the standard display window layout storage section 351 (step S15). A display window in which operation buttons having the set button size are displayed is displayed on the LCD 38 in accordance with the standard display window layout (step S16). The standard display window layout of the image forming apparatus 1 has "8" or "16" operation buttons. In the standard display window layout with "8" operation buttons, operation buttons that should be displayed in one display window can be displayed in any button size settable in the image forming apparatus 1.

If the number of operation buttons of the standard display window layout is determined as 16 (16 buttons in step S12), it is determined in step S13 as another determination means whether the button size selected and set in step S11 is 3 cm or more. If it is determined that the selected and set button size is not 3 cm or more (NO in step S13), the standard display window layout is decided as the display window layout in step S14 as a layout decision means. Standard display window layout data is loaded from the standard display window layout storage section 351 (step S15). A display window in which operation buttons having the set button size are displayed is displayed on the LCD 38 in accordance with the standard display window layout (step S16).

On the other hand, if it is determined that the selected and set button size is 3 cm or more (YES in step S13), a change display window layout is decided as the display window layout as a layout decision means (step S17). Change display window layout data is loaded from the change display window layout storage section 352 (step S18). A display window in which operation buttons having the set button size are displayed is displayed on the LCD 38 in accordance with the change display window layout (step S19).

In switching to another display window, the operation display control section executes processing from step S12. A display window is displayed in accordance with a display window layout which corresponds to the number of operation buttons and selected button size in the standard display window layout of the display window.

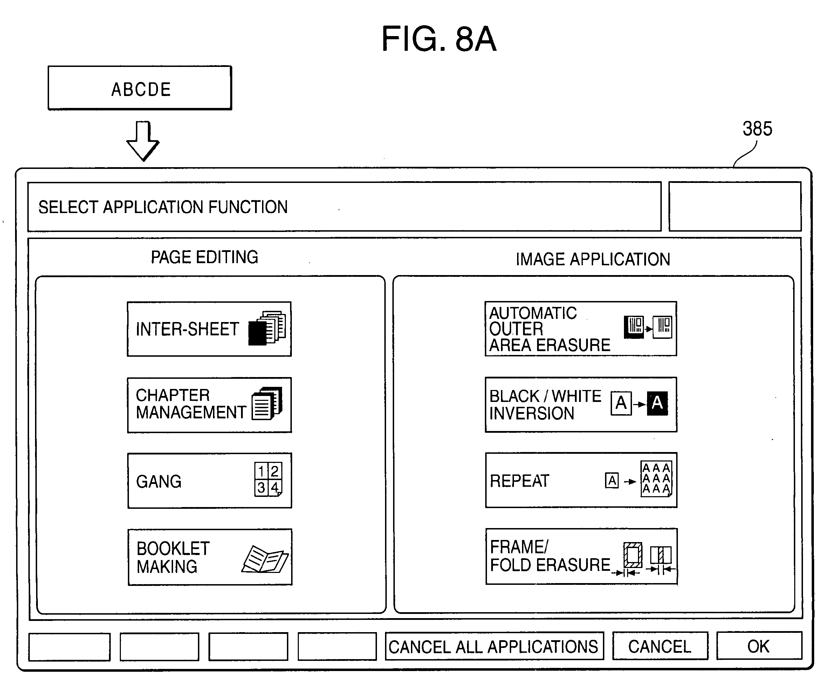

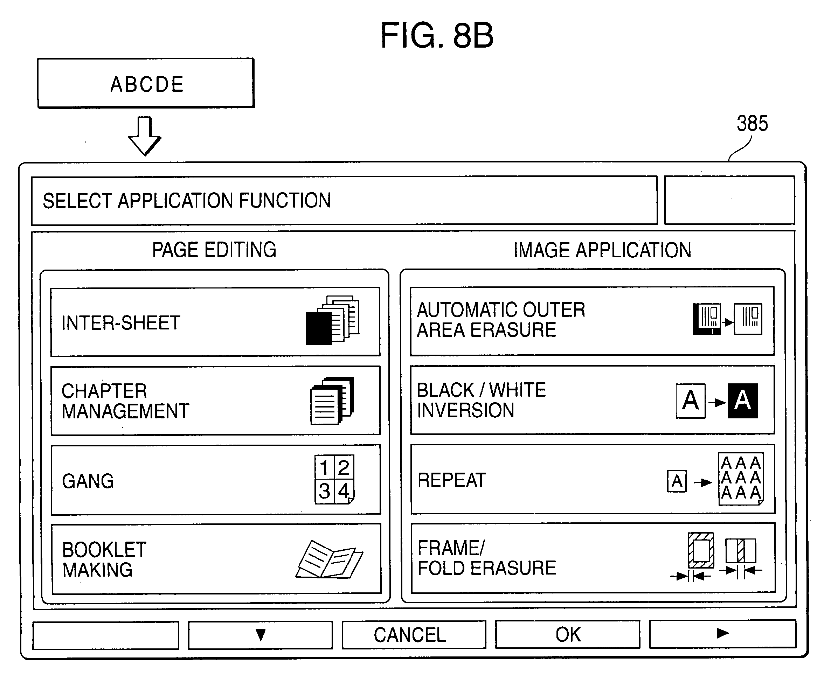

Fig. 8A shows an example of a window displayed when button size 2 cm is selected on the button size selection window 384. In this window, an application function window 385 corresponding to the standard display window layout with 8 operation buttons is displayed in accordance with setting of button size 2 cm. Fig. 8B shows an example of the application function window 385 displayed when button size 4 cm is selected.

As shown in Figs. 8A and 8B, even when the button size is changed to the selected button size, all operation buttons that should be displayed in one display window can be displayed by using the standard display window layout. For this reason, the display window layout is not changed.

On the application function window 385, the display window layout is not changed even when the button size is changed. However, the easiness in seeing and impression greatly change depending on the button size. The user can set a window with a desired button size on a familiar display window layout.

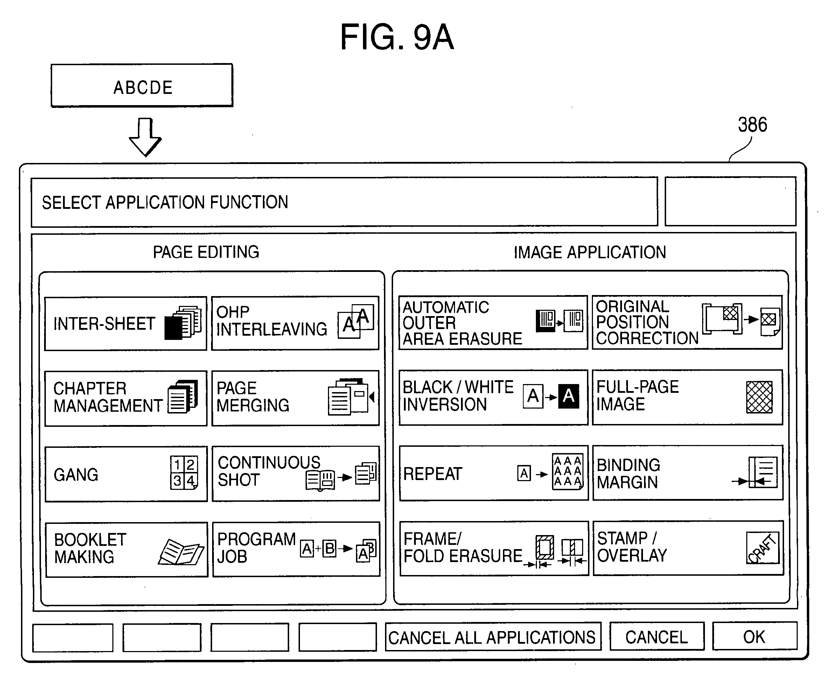

Fig. 9A shows another example of the window displayed when button size 2 cm is selected on the button size selection window 384. In this window, an application function window 386 corresponding to the standard display window layout with 16 operation buttons is displayed in accordance with setting of button size 2 cm. As shown in Fig. 9A, when the button size is 2 cm, the window can be displayed in the standard display window layout. Hence, the application function window 386 is displayed in the standard display window layout.

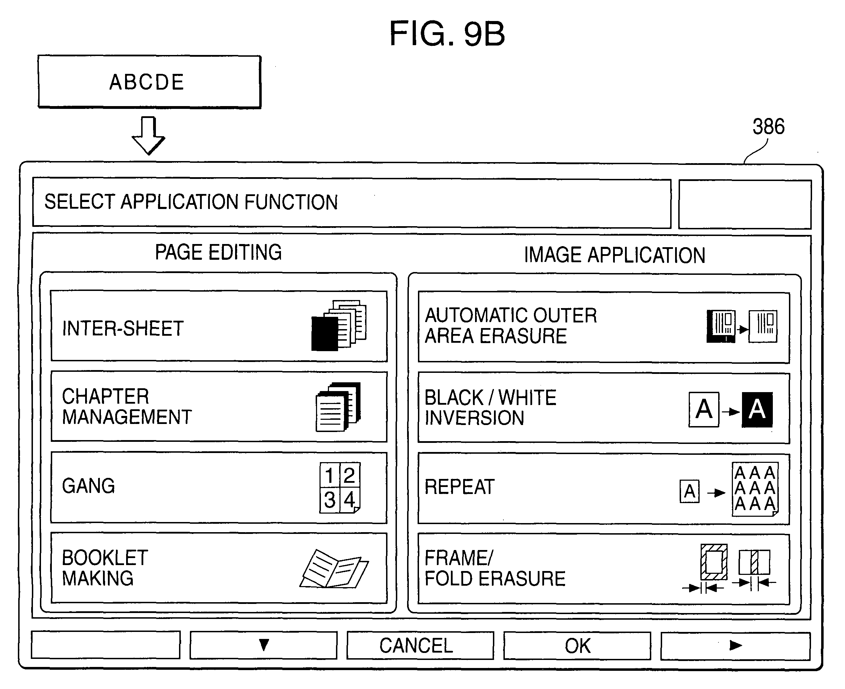

Fig. 9B shows an example of the window 386 displayed when button size 4 cm is selected. As shown in Fig. 9B, when the selected button size is changed to 4 cm, all operation buttons that should be displayed in one display window cannot be displayed by using the standard display window layout. Hence, the display window layout is changed.

As described above, the application function window 386 cannot be displayed in the standard display window layout for a certain button size. However, the display window layout can be changed in accordance with the button size. When a small button size is selected, many operation buttons and information can be displayed in one display window. For this reason, the necessity for scrolling the window decreases, and the operability increases. When a large button size is selected, a display window easy to see can be provided.

As described above, when a character size change instruction is input, a character size selection window is displayed on the LCD 38. When a character size desired by the user is selected, it is set as the display character size. In displaying the window, the number of operation buttons of the standard display window layout of the window to be displayed is determined. For 8 buttons, the standard display window layout is decided as the display window layout. Characters are displayed in the character size set on the standard display window layout.

When the number of operation buttons of the standard display window layout is 16, it is determined whether the selected character size is 8 × 8 mm or more. If it is determined that the character size is not 8 × 8 mm or more, the standard display window layout is decided as the display window layout. Characters are displayed in the set character size in accordance with the standard display window layout. On the other hand, if it is determined that the selected character size is 8 × 8 mm or more, the change display window layout is decided as the display window layout. Characters are displayed in the set character size in accordance with the change display window layout.

In addition, when a button size change instruction is input, a button size selection window is displayed on the LCD 38. When a button size desired by the user is selected, the button size is set as the display button size. In displaying the window, the number of operation buttons of the standard display window layout of the window to be displayed is determined. For 8 buttons, the standard display window layout is decided as the display window layout. Buttons are displayed in the set button size in accordance with the standard display window layout.

When the number of operation buttons of the standard display window layout is 16, it is determined whether the selected button size is 3 cm or more. If it is determined that the button size is not 3 cm or more, the standard display window layout is decided as the display window layout. Operation buttons are displayed in the set button size in accordance with the standard display window layout. On the other hand, if it is determined that the selected button size is 3 cm or more, the change display window layout is decided as the display window layout. Operation buttons are displayed in the set button size in accordance with the change display window layout.

Each user can change the display of the operation panel of the image forming apparatus to display most convenient for him/her. For this reason, although uniform display with fixed character and button sizes conventionally makes the operability low for some users, this problem can be solved.

The contents described in the above embodiment merely constitute a preferred example of the image forming apparatus 1 according to the present invention, and the present invention is not limited to this.

For example, in the above embodiment, the number of operation buttons of the standard display window layout is 8 or 16. However, the present invention is not limited to this. For example, a table may be prepared, which stores the number of operation buttons of the standard display window layout, the minimum value of the character size that makes it impossible to display all characters to be displayed in one display window in the standard display window layout, and the minimum value of the button size that makes it impossible to display all operation buttons to be displayed in the standard display window layout in correspondence with each other. It is determined by looking up this table whether all characters that should be displayed can be displayed in the character size set in the standard display window layout or whether all operation buttons that should be displayed can be displayed in the set button. In this case, the present invention can be applied without limiting the number of operation buttons in the standard display window layout.

In the above embodiment, two display window layouts, i.e., the standard display window layout and change display window layout are prepared for one display window. For a character size or button size that cannot be displayed in the standard display window layout, the display window layout is changed to the change display window layout. However, a display window layout may be prepared in correspondence with each character size or button size. A display window may be displayed in a display window layout corresponding to a set character size or button size.

The detailed arrangement and detailed operation of the image forming apparatus 1 can also appropriately be changed without departing from the spirit and scope of the present invention.

## Claims

1. An image forming apparatus comprising an operation display section which has a transparent touch panel superposed on a display screen of a display section, can input an operation instruction by pressing a transparent touch panel portion corresponding to an operation instruction item character group displayed on the display screen, and is associated with a main body of said image forming apparatus, comprising:
an operation display control section which controls said operation display section to display, on the display screen, selection items to decide a display size of the operation instruction item character group on the display screen and display the operation instruction item character group in the display size decided by selecting a selection item.

2. An apparatus according to claim 1, wherein said operation display control section comprises
determination means for determining whether the operation instruction item character group having the decided display size can be displayed in one display window layout, and
layout setting means for setting a display window layout of the operation instruction item character group on the display screen on the basis of a determination result of said determination means.

3. An apparatus according to claim 2, wherein the display window layout includes a standard display window layout and a change display window layout.

4. An apparatus according to claim 3, wherein the standard display window layout is set by said layout setting means when said determination means determines that the display size of the operation instruction item character group is less than a predetermined display size.

5. An apparatus according to claim 3, wherein the change display window layout is set by said layout setting means when said determination means determines that the display size of the operation instruction item character group is not less than a predetermined display size.

6. An image forming apparatus comprising an operation display section which has a transparent touch panel superposed on a display screen of a display section, can input an operation instruction by pressing a transparent touch panel portion corresponding to each operation button displayed on the display screen, and is associated with a main body of said image forming apparatus, comprising:
an operation display control section which controls said operation display section to display, on the display screen, selection items to decide a display size of each operation button on the display screen and display each operation button in the display size decided by selecting a selection item.

7. An apparatus according to claim 6, wherein said operation display control section comprises
determination means for determining whether each operation button having the decided display size can be displayed in one display window layout, and
layout setting means for setting a display window layout of each operation button on the display screen on the basis of a determination result of said determination means.

8. An apparatus according to claim 7, wherein the display window layout includes a standard display window layout and a change display window layout.

9. An apparatus according to claim 8, wherein the standard display window layout is set by said layout setting means when said determination means determines that the display size of each operation button is less than a predetermined display size.

10. An apparatus according to claim 8, wherein the change display window layout is set by said layout setting means when said determination means determines that the display size of each operation button is not less than a predetermined display size.
